(19)

**Europäisches Patentamt**
**European Patent Office**
**Office européen des brevets**

(11) **EP 2 746 222 B1**

(12) **EUROPÄISCHE PATENTSCHRIFT**

(45) Veröffentlichungstag und Bekanntmachung des Hinweises auf die Patenterteilung:
**12.10.2016 Patentblatt 2016/41**

(21) Anmeldenummer: **13195798.7**

(22) Anmeldetag: **05.12.2013**

(51) Int Cl.:
***C01B 33/107*** (2006.01)

(54) **VERFAHREN ZUR KONVERTIERUNG VON SILICIUMTETRACHLORID IN TRICHLORSILAN**

PROCESS FOR CONVERTING SILICON TETRACHLORIDE TO TRICHLOROSILANE

PROCÉDÉ DE CONVERSION DE TÉTRACHLORURE DE SILICIUM EN TRICHLOROSILANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2012 DE 102012223784**

(43) Veröffentlichungstag der Anmeldung:
**25.06.2014 Patentblatt 2014/26**

(73) Patentinhaber: **Wacker Chemie AG**
**81737 München (DE)**

(72) Erfinder:
• **Knoth, Jens Felix, Dr.**
**81475 München (DE)**

• **Eberle, Hans-Jürgen, Dr.**
**81477 München (DE)**
• **Rüdinger, Christoph, Dr.**
**82319 Starnberg (DE)**

(74) Vertreter: **Ege, Markus et al**
**Wacker Chemie AG**
**Hanns-Seidel-Platz 4**
**81737 München (DE)**

(56) Entgegenhaltungen:
**DE-A1-102005 005 044      DE-A1-102010 039 267**
**JP-A- S6 081 010      US-A1- 2011 200 512**

**Beschreibung**

Gegenstand der Erfindung ist ein Verfahren zur Konvertierung von Siliciumtetrachlorid in Trichlorsilan.

Trichlorsilan (TCS) wird zur Herstellung von polykristallinem Silicium verwendet.

Die Herstellung von TCS erfolgt üblicherweise in einem Wirbelbettverfahren aus metallurgischem Silicium und Chlorwasserstoff. Um hochreines TCS zu erzeugen, erfolgt anschließend eine Destillation. Dabei fällt als Nebenprodukt auch Siliciumtetrachlorid (STC)an.

Die größte Menge an STC fällt bei der Abscheidung von polykristallinem Silicium an.

Polykristallines Silicium wird beispielweise mittels des Siemens-Prozesses erzeugt. Dabei wird polykristallines Silicium in einem Reaktor an erhitzten Dünnstäben abgeschieden. Als Prozessgas wird als Silicium enthaltende Komponente ein Halogensilan wie TCS in Anwesenheit von Wasserstoff verwendet. Bei der Umsetzung von TCS (Disproportionierung) in abgeschiedenes Silicium entstehen große Mengen an STC.

Aus STC kann beispielsweise durch Reaktion mit Wasserstoff und Sauerstoff bei hohen Temperaturen in Brennkammern hoch disperse Kieselsäure produziert werden.

Die wirtschaftlich interessanteste Verwendung von STC ist jedoch die Konvertierung zu TCS. Diese erfolgt durch Reaktion von STC mit Wasserstoff in TCS und Chlorwasserstoff. Dadurch ist es möglich, aus dem bei der Abscheidung entstehenden Nebenprodukt STC wieder TCS zu erzeugen und jenes TCS wieder dem Abscheideprozess zuzuführen, um elementares Silicium zu erzeugen.

Es sind zwei Verfahren zur Konvertierung bekannt: Das erste Verfahren, die sogenannte Niedertemperaturkonvertierung, wird in Anwesenheit eines oder mehrerer Katalysatoren durchgeführt. Allerdings kann die Anwesenheit von Katalysatoren (z.B. Cu) die Reinheit des TCS und damit des daraus abgeschiedenen Siliciums negativ beeinflussen. Ein zweites Verfahren, die sogenannte Hochtemperaturkonvertierung, ist ein endothermer Prozess, wobei die Bildung der Produkte gleichgewichtslimitiert ist. Um überhaupt zu einer signifikanten TCS-Erzeugung zu gelangen, müssen im Reaktor sehr hohe Temperaturen angewendet werden ($\geq$ 900 °C).

US 3933985 A beschreibt die Umsetzung von STC mit Wasserstoff zu TCS bei Temperaturen im Bereich von 900°C bis 1200°C und mit einem Molverhältnis $H_2$:$SiCl_4$ von 1:1 bis 3:1. Es werden allerdings lediglich Ausbeuten von 12-13% erreicht.

Aus Gründen der Energieeinsparung werden oftmals die Edukte der Reaktion (STC und Wasserstoff) üblicherweise mit Hilfe der heißen Abgase des Reaktors (Produkte und Reste der Edukte, also im wesentlichen TCS, Chlorwasserstoff, STC und Wasserstoff) erwärmt.

DE 30 24 320 C2 beansprucht beispielsweise eine Vorrichtung zur Konvertierung von STC zu TCS unter Verwendung einer Wärmeaustauschereinheit. Die Wärmetauschereinheit kann beispielsweise aus einem Satz elektrisch unbeheizter Graphitrohre, die als Gasableitung für Produktgas dienen, welche außen im Gegenstromprinzip von Eduktgas umströmt werden, bestehen.

US 4217334 A offenbart ein Verfahren zur Hydrierung von STC mit Wasserstoff in TCS in einem Temperaturbereich von 900-1200°C. Durch ein hohes Molverhältnis $H_2$:STC (bis zu 50:1) und eine Flüssigkeitsquenche des heißen Produktgases unter 300°C werden deutlich höhere TCS-Ausbeuten erzielt (bis ca. 35% bei einem Molverhältnis $H_2$:STC = 5:1). Nachteilig ist jedoch der deutlich höhere Wasserstoffanteil im Reaktionsgas sowie die angewendete Quenche mittels einer Flüssigkeit, was beides den energetischen Aufwand des Verfahrens und damit die Kosten stark erhöht, zumal die Abkühlung ohne Nutzung der freiwerdenden Energie erfolgt.

WO 2008/146741 A1 behandelt die Herstellung von TCS durch Reduktion von STC. Der Prozess gliedert sich dabei in zwei Reaktionsstufen. Die erste Stufe wird in einem ersten Temperaturbereich von 1000-1900 °C durchgeführt. Im Anschluss an die erste Reaktionsstufe erfolgt eine Abkühlung des Reaktionsgases auf 950 °C oder weniger innerhalb von 1 s. In einem zweiten Reaktionsschritt wird die Temperatur bei 600-950 °C für 0,01-5 s gehalten, bevor zu Temperaturen von kleiner als 600 °C abgekühlt wird.

US 8168152 B2 offenbart ebenfalls einen mehrstufigen Abkühlprozess bei der Hydrierung von STC zu TCS. Die Reaktionstemperatur beträgt 1000-1900 °C. Es wird innerhalb von 10 ms ab dem Beginn der Abkühlung auf eine Temperatur von größer oder gleich 600°C gekühlt und auf eine Temperatur von kleiner oder gleich 500°C innerhalb von 2 s. US 8168152 B2 beschreibt die Notwendigkeit eines Halteschrittes im Abkühlverlauf, so dass die Temperatur über einen Zeitraum von 10-5000 ms auf einer Temperatur im Bereich von 500-950 °C gehalten werden muss, um sich bildende Silane höherer Ordnung zu zersetzen und damit die Bildung von Polymeren zu verhindern.

EP 2 088 124 A1 offenbart, dass hohe Konvertierraten durch schnelle Abkühlung eines Reaktionsgasgemisches, welches durch Reaktion von STC und $H_2$ bei Temperaturen von 900-1900 °C erhalten wird, erreicht werden. Allerdings wird die hohe Abkühlrate durch Quenchen auf 800-300 °C erreicht. Erst bei diesen niedrigeren Temperaturen wird die bei der Abkühlung frei werdende Energie auf die Edukte übertragen.

EP 2 085 359 A1 beschreibt ein Verfahren, bei welchem STC und Wasserstoff bei Temperaturen oberhalb von 800 °C zur Reaktion gebracht werden. Das Produktgas wird mittels eines Kühlgases innerhalb von 1 s auf T kleiner oder gleich 650°C abgekühlt (gequencht). Es werden zwar hohe Ausbeuten durch Quenchen des Reaktionsgases entweder durch Flüssigkeiten oder durch Gase erhalten. Die abgeführte Energie kann hierbei jedoch nicht wirtschaftlich genutzt werden.

DE 3024319 A1 betrifft ebenfalls ein kontinuierliches Verfahren zur Herstellung von TCS durch Hydrierung von STC in einem Hochtemperaturreaktor bei 900-1300°C. Hierbei beträgt die Reaktionszeit im Reaktor jedoch 200-2 s.

US 8197784 B2 beansprucht ein Verfahren zur Herstellung von TCS, welches durch Umsetzung von STC- und $H_2$-haltigen Gasen bei überkritischem Druck erfolgt. Hierbei verweilen die Eduktgase 200-0,05 s in der Reaktionszone und werden im Anschluss daran innerhalb von 200-0,05 s auf 300 °C abgekühlt.

DE102010039267 (A1) offenbart ein Verfahren, bei dem ein siliciumtetrachloridhaltiger Eduktstrom und ein wasserstoffhaltiger Eduktstrom in einem Hydrodechlorierungsreaktor durch Zufuhr von Wärme zur Reaktion gebracht werden unter Bildung eines trichlorsilanhaltigen und HCl-haltigen Produktgemisches, dadurch gekennzeichnet, dass das Verfahren folgende weitere Merkmale aufweist: der siliciumtetrachloridhaltige Eduktstrom und/oder der wasserstoffhaltige Eduktstrom werden unter Druck in den druckbetriebenen Hydrodechlorierungsreaktor geführt; der Reaktor umfasst mindestens ein in eine Reaktionskammer hineinragendes Strömungsrohr durch das einer der oder beide Eduktströme in die Reaktionskammer geführt werden; das Produktgemisch wird als unter Druck stehender Strom aus der Reaktionskammer herausgeführt; die Reaktionskammer und, optional, das Strömungsrohr bestehen aus einem keramischen Material; das in der Reaktionskammer gebildete Produktgemisch wird so aus der Reaktionskammer herausgeführt, dass der Edukt-/Produktstrom im Inneren der Reaktionskammer zumindest teilweise aussen entlang des in die Reaktionskammer hineinragenden Strömungsrohres geführt wird; die Zufuhr von Wärme erfolgt durch einen die Reaktionskammer zumindest teilweise umschliessenden Heizmantel oder Heizraum; und die Reaktionskammer umfasst stromabwärts des durch den Heizmantel oder Heizraum erwärmten Bereichs der Reaktionskammer einen integrierten Wärmetauscher, der das erwärmte Produktgemisch abkühlt, wobei die abgeführte Wärme zum Vorheizen des siliciumtetrachloridhaltigen Eduktstroms und/oder des wasserstoffhaltigen Eduktstroms verwendet wird.

In US 2008/0112875 A1 und DE 10 2005 005 044 A1 wird ein Verfahren zur Herstellung von TCS durch Hydrierung von STC bei Reaktionstemperaturen von 700-1500°C offenbart, bei welchem die Produktmischung mittels eines Wärmetauschers innerhalb einer Verweilzeit der Reaktionsgase von $\tau = A \exp(-B \times T_{Abkühl}/1000)$ [ms] (mit A=4000; 6≤B≤50 und 100°C ≤ $T_{Abkühl}$ ≤ 900°C) auf die Abkühltemperatur ($T_{Abkühl}$) gekühlt wird, wobei die über einen Wärmetauscher abgeführte Energie zur Erwärmung der Eduktgase verwendet wird. Die Verweilzeiten des Reaktionsgases im Reaktor liegen bei $\tau$ ≤ 0,5 s. Es hat sich aber gezeigt, dass es im Verfahren nach US 2008/0112875 A1 im Betrieb zu überraschenden Einbußen in der Ausbeute und damit in der Wirtschaftlichkeit kommen kann.

Die Aufgabe der Erfindung bestand darin, dies zu vermeiden.

Die Aufgabe der Erfindung wird gelöst durch ein Verfahren zur Konvertierung von STC in TCS, durch Einbringen von Eduktgas enthaltend STC und Wasserstoff in eine Reaktionszone eines Reaktors, in der die Temperatur 1200-1600°C beträgt, wobei die Reaktionszone durch eine außerhalb der Reaktionszone befindliche Heizung erwärmt wird und das entstehende Produktgas enthaltend TCS anschließend abgekühlt wird, unter der Maßgabe, dass innerhalb von 0,1 - 35 ms auf eine Temperatur von 700-900°C abgekühlt wird, wobei das Eduktgas mittels eines Wärmetauschers nach dem Gegenstromprinzip durch das Produktgas erwärmt wird, wobei Reaktor und Wärmetauscher ein einzelnes, gasdichtes Werkstück bilden, wobei das Werkstück aus einem oder mehreren keramischen Materialien ausgewählt aus der Gruppe bestehend aus Siliziumkarbid, Siliziumnitrid, Graphit, mit SiC beschichtetem Graphit und Quarzglas besteht, dadurch gekennzeichnet, dass die hydrodynamische Verweildauer von Eduktgas in der Reaktionszone 2,8-20 ms beträgt.

Das Verfahren sieht vor, Eduktgase in eine Reaktionszone zu führen, in der sie nur sehr kurz bei hohen Temperaturen von 1200-1600°C verweilen. Im Anschluss an diese Reaktionszone wird die Temperatur der Gase durch Wärmeaustausch extrem schnell gesenkt, wobei die durch die Abkühlung freiwerdende Energie auf das Eduktgas übertragen wird und die Geschwindigkeit der Abkühlung so hoch ist, dass das thermische Gleichgewicht eingefroren wird.

Hierbei erfolgt die Reaktion der Gase und der Wärmetausch in einer einzigen einteiligen Vorrichtung, die aus einem oder mehreren keramischen Materialien ausgewählt aus der Gruppe bestehend aus Siliziumkarbid, Siliziumnitrid, Graphit, mit SiC beschichtetem Graphit und Quarzglas besteht. Die Vorrichtung ist gasdicht. Im Stand der Technik waren Reaktor und Wärmetauscher zwei Werkstücke, so dass Dichtungen zwischen den beiden Werkstücken verwendet werden mussten. Die Erfinder haben erkannt, dass die beobachteten Einbußen in der Wirtschaftlichkeit auf Undichtigkeiten zurückzuführen sind. Diese Undichtigkeiten wurden verursacht durch fehlerhafte Dichtungen, die im Hochtemperaturbereich besonders empfindlich zu sein scheinen.

Die Erfindung umgeht diese Problematik dadurch, dass keinerlei Dichtungen mehr zwischen Wärmetauscher und Reaktor erforderlich sind, da es sich um ein einzelnes, gasdichtes Werkstück handelt, umfassend Reaktor mit Reaktionszone sowie Wärmetauscher. Gegebenenfalls sind Reaktor und Wärmetauscher aus mehreren Teilen durch Sintern zusammengesetzt. Sie bilden jedoch insofern ein einzelnes Werkstück, dass die einzelnen Teile nicht mit Montagehilfsmitteln wie Schrauben, Bolzen oder Klemmen aneinander befestigt sind, was Dichtungen nötig machen würde.

Die Länge des einzelnen Werkstücks beträgt in einer Ausführungsform höchstens 1500 mm, bevorzugt höchstens 1000 mm und besonders bevorzugt höchstens 600 mm.

Die Vorrichtung umfasst Kanäle oder Kapillaren, wobei in einem Teil der Kapillaren oder Kanäle nur Produktgas und in dem anderen Teil nur Eduktgas fließt. Die Kapillaren können auch in Form eines Rohrbündelwärmetauschers angeordnet werden. In diesem Fall fließt ein Gasstrom durch die Rohre (Kapillaren), während der andere Gasstrom um die Rohre fließt.

Das Verfahren kann auch hohe Abkühlgeschwindigkeiten realisieren. Dies wird vorzugsweise dadurch bewerkstelligt, dass eine Kanaltiefe der Vorrichtung mit der Reaktorlänge variiert. Hierbei werden in Bereichen, die einen besonders hohen Energietransfer erfordern, Kanäle mit geringen hydraulischen Durchmessern (z.B. < 0,5 mm) eingesetzt, während in den übrigen Bereichen die hydraulischen Durchmesser der Kanäle größer sein können. Damit wird eine schnelle Abkühlung bei reduziertem Staudruck des Reaktors erreicht.

Die Reaktionszone des Reaktors wird von außen beheizt. Zu diesem Zweck ist außerhalb der Reaktionszone eine Heizung vorgesehen. Dadurch sind die Heizelemente nicht dem Reaktionsmedium ausgesetzt. Dies ist besonders vorteilhaft wegen ihrer dadurch erhöhten Lebensdauer. Dies macht das Verfahren wirtschaftlicher. Während alle dem Fachmann geläufigen Ausführungen der Heizung verwendet werden können, ist eine elektrische Beheizung, wobei der Wärmeübertrag mittels Strahlung erfolgt, besonders bevorzugt.

Unter der Reaktionszone der Vorrichtung (Reaktor + Wärmetauscher) ist der Bereich zu verstehen, der von außen beheizt wird und der nicht im Gleich-, Kreuz- oder Gegenstrom zum Eduktgas geführt ist.

Die Reaktionstemperatur beträgt 1200-1600°C. Die Messung der Reaktionstemperatur wird als maximale Oberflächentemperatur des Werkstücks, bevorzugt über eine pyrometrische Messung, ermittelt.

Zum Beispiel eignet sich hierfür ein Pyrometer des Typs IGA 140-TV der Fa. Lumasense Technologies.

Vorzugweise weist der Wärmetauscher ein Verhältnis Austauschfläche zu Gasvolumen von > 500m$^{-1}$ auf.

Durch das hohe Oberfläche- zu Volumenverhältnis der Vorrichtung an der heißesten Stelle von bevorzugt OF/Volumen > 500 m$^{-1}$, entspricht die Oberflächentemperatur der Gastemperatur an dieser Position, die einer direkten Messung so nicht einfach zugänglich wäre.

Das Gas hat in der Reaktionszone nur eine kurze hydrodynamische Verweildauer von vorzugsweise $2,8 \leq \tau \leq 20$ ms.

Die hydrodynamische Verweildauer berechnet sich hierbei nach der dem Fachmann geläufigen Formel

$\tau = \dfrac{V_R}{\dot{V}}$ mit $V_R$: Reaktorvolumen, bzw. Volumen der Reaktionszone und $\dot{V}$: Volumenstrom an Gas bei den Reaktionsbedingungen (p,T). Im Anschluss an die Reaktionszone wird das Gas schnell innerhalb von 0,1-35 ms auf eine Temperatur von 700-900 °C gekühlt.

Vorzugsweise ergeben sich die gewählten Abkühlzeiten auf Temperaturen von 700-900 °C aus der Formel

$$\tau = A x \exp(-B x T_{Abkühl}/1000) \quad [ms]$$

(mit A=4000; 700°C $\leq T_{Abkühl} \leq$ 900°C)
wobei für B je nach Abkühltemperatur folgendes gilt:

$T_{Abkühl}$ = 700 °C: 15,1 $\geq$ B $\geq$ 6,75, bevorzugt $T_{Abkühl}$ = 700: 11, 8 $\geq$ B $\geq$ 7,72; besonders bevorzugt $T_{Abkühl}$ = 700: 10,86 $\geq$ B $\geq$ 8,56;

$T_{Abkühl}$ = 800 °C: 13,25 $\geq$ B $\geq$ 5,92, bevorzugt $T_{Abkühl}$ = 800: 10,37 $\geq$ B $\geq$ 6,75; besonders bevorzugt $T_{Abkühl}$ = 800: 9,5 $\geq$ B $\geq$ 7,49;

$T_{Abkühl}$ = 900 °C: 11,8 $\geq$ B $\geq$ 5,25, bevorzugt $T_{Abkühl}$ = 900: 9,21 $\geq$ B $\geq$ 6; besonders bevorzugt $T_{Abkühl}$ = 900: 8,45 $\geq$ B $\geq$ 6,66.

Bei Abkühltemperaturen zwischen den angegebenen Werten 700 °C, 800 °C, 900 °C sind die Werte für B vorzugsweise zu interpolieren.

Die Abkühlung auf eine Temperatur von 700 °C erfolgt je nach Druck am Reaktorausgang vorzugsweise innerhalb von 0,1-10 ms bei einem Überdruck von 0,1 bar am Reaktorausgang, innerhalb von 0,1-20 ms bei einem Überdruck von 5 bar am Reaktorausgang und innerhalb von 0,1-35 ms bei einem Überdruck von 10 bar am Reaktorausgang.

Die maximalen Abkühlzeiten auf eine Temperatur von 700 °C sollen für Drücke am Reaktorausgang zwischen 0,1 bar und 5 bar bei 10-20 ms liegen und in diesem Druckbereich linear ansteigen.

Die maximalen Abkühlzeiten auf eine Temperatur von 700 °C sollen für Drücke am Reaktorausgang zwischen 5 bar und 10 bar bei 20-35 ms liegen und in diesem Druckbereich linear ansteigen.

Das Abkühlen erfolgt ohne Halteschritte. Es kann direkt kontinuierlich und schnell abgekühlt werden. Bevorzugt wird bei einem Überdruck am Reaktorausgang von 0,1 bar innerhalb von 1-7 ms auf eine Temperatur von 700 °C abgekühlt. Besonders bevorzugt ist bei einem Überdruck am Reaktorausgang von 0,1 bar eine Abkühlzeit von 1,5-5 ms, ganz besonders bevorzugt ist bei einem Überdruck am Reaktorausgang von 0,1 bar eine Abkühlzeit von 2-4 ms.

Bevorzugt wird bei einem Überdruck am Reaktorausgang von 5 bar innerhalb von 1-18 ms auf eine Temperatur von 700 °C abgekühlt. Besonders bevorzugt ist bei einem Überdruck am Reaktorausgang von 5 bar eine Abkühlzeit von 1,5-10 ms, ganz besonders bevorzugt ist bei einem Überdruck am Reaktorausgang von 5 bar eine Abkühlzeit von 2-6 ms.

Bevorzugt wird bei einem Überdruck am Reaktorausgang von 10 bar innerhalb von 1-33 ms auf eine Temperatur von 700 °C abgekühlt. Besonders bevorzugt ist bei einem Überdruck am Reaktorausgang von 10 bar eine Abkühlzeit von 1,5-20 ms, ganz besonders bevorzugt ist bei einem Überdruck am Reaktorausgang von 10 bar eine Abkühlzeit von 2-10 ms.

Die beim Abkühlen abgeführte Energie wird dazu genutzt, den Eduktzustrom aufzuheizen.

Nachdem auf eine Temperatur von 700°C abgekühlt wurde, kann die weitere daran anschließende Abkühlung deutlich langsamer erfolgen. Dies ist bevorzugt. Es hat sich nämlich gezeigt, dass durch eine weiterhin schnelle Abkühlung keine weitere Ausbeutesteigerung mehr realisiert werden kann.

Die hohe Abkühlgeschwindigkeit wird über die besondere Ausgestaltung der Vorrichtung ermöglicht:

Die Effizienz des Wärmetauschers wird bevorzugt mit der Reaktorlänge variiert, wobei dies idealerweise über eine Variation der charakteristischen Länge der Hydrodynamik, nämlich dem hydraulischen Durchmesser, mit der Reaktorlänge erfolgt.

Hierdurch wird bevorzugt im Bereich tieferer Temperaturen von kleiner als 700 °C durch Querschnittserweiterung ein niedrigerer Druckverlust erzeugt, wobei bevorzugt im Bereich höherer Temperaturen von größer oder gleich 700 °C eine hohe Wärmetauscheffizienz umgesetzt wird.

So wird in einer bevorzugten Ausführungsform des Verfahrens die typische Strukturgröße (bzw. charakterist. Länge) mit der Reaktorlänge variiert. In einer bevorzugten Ausführungsform werden die Kanaltiefe und die Anzahl der Kanäle der Vorrichtung mit der Reaktorlänge variiert.

Die Kanäle können einen beliebigen Querschnitt aufweisen, insbesondere einen Kreis, ein Rechteck, eine Raute, ein Dreieck, eine U-Form, eine W-Form usw.

In einer weiteren bevorzugten Ausführungsform des Verfahrens sind Stegstrukturen oder ähnliche Strukturen vorgesehen, die dem Fachmann auf dem Gebiet der Wärmeübertragung bekannt sind und einen äquivalenten Effekt zeigen. In dieser Ausführungsform werden vorzugsweise der Abstand zwischen den Stegen und ein freier Strömungsquerschnitt mit der Reaktorlänge variiert.

In einer besonders bevorzugten Ausführungsform der Erfindung werden Kanäle mit einem Rechteckquerschnitt eingesetzt.

Vorzugsweise werden in Bereichen, die besonders hohen Energietransfer erfordern, Kanäle mit geringen hydraulischen Durchmessern eingesetzt, während in den übrigen Bereichen die hydraulischen Durchmesser der Kanäle größer sein können. Der hydraulische Durchmesser errechnet sich hierbei nach der, dem Fachmann bekannten, Formel:

$$d_h = 4\frac{f}{U}$$ mit $f$: Querschnittsfläche des Kanals und $U$ : Umfang des Kanals

Der hydraulische Durchmesser in den Kanälen in Bereichen mit besonders hohen Energietransfer beträgt vorzugsweise $0{,}05\text{ mm} \le d_h < 1\text{ mm}$, besonders bevorzugt $0{,}25\text{ mm} \le d_h \le 0{,}75\text{ mm}$ und ganz besonders bevorzugt $0{,}4\text{ mm} \le d_h \le 0{,}6\text{ mm}$.

Auch die weitere Abkühlung des Reaktionsgases verläuft unter Ausnutzung der abgegebenen Energie und ohne dass ein Halteschritt im Temperaturverlauf enthalten ist.

Die Gesamtverweildauer in der Vorrichtung (Reaktionszone plus Wärmetausch) beträgt vorzugsweise $10\text{ ms} \le \tau \le 400\text{ ms}$, bevorzugt $20 \le \tau \le 200\text{ ms}$, besonders bevorzugt $40 \le \tau \le 110\text{ ms}$.

Geringe Verweilzeiten sind insbesondere unter dem Gesichtspunkt der Prozesssicherheit vorteilhaft.

Die Vorrichtung vereinigt im dichtungslosen Teil sowohl einen Reaktionsbereich als auch einen Abschnitt, in welchem der Wärmetausch zwischen Eduktgas und Produktgas stattfindet. Beide Bereiche sind in einem Werkstück dichtungsfrei und nach außen gasdicht vereinigt.

Weiterhin sind, abgesehen vom Reaktionsraum, die Gasführungen des Eduktgases und des Produktgases gasdicht voneinander getrennt, wodurch Leckagen vom Edukt- zum Produktgas, die die Ausbeute mindern würden, sicher verhindert werden.

Zudem müssen im Hochtemperaturbereich von größer als 500 °C keine Dichtungen verwendet werden, wodurch höhere Standzeiten des Reaktors realisiert werden können und zudem die Prozesssicherheit erhöht wird.

Die einzelnen Werkstücke (bzw. Einheiten) sind miteinander kombinierbar, so dass bevorzugt durch die Parallelschaltung der Einheiten die Produktionskapazität angepasst werden kann.

**Fig. 1** zeigt schematisch, wie eine solche Parallelschaltung von Reaktoreinheiten ausgestaltet werden kann.

**1** zeigt die Durchführung für Eduktgas.

**2** zeigt die Durchführung für Produktgas.

**3** zeigt eine der verschalteten Reaktoreinheiten (einzelnes, gasdichtes Werkstück).

**4** zeigt eine Dichtung zwischen den Reaktoreinheiten.

**Fig. 2** zeigt schematisch, wie eine Parallelschaltung beheizt wird.

**Fig. 2** beschreibt eine vorzugsweise Ausführung der Kombination der erfindungsgemäßen Werkstücke.

**1** zeigt die Durchführung des Eduktgases, **2** zeigt die Durchführung für das Produktgas.

**3** zeigt eine der verschalteten Reaktoreinheiten (einzelnes, gasdichtes Werkstück).

Diese Einheiten können beispielsweise mittels Dichtungen **4** kombiniert werden.

Hierbei werden die Dichtungen bevorzugt im Kaltbereich, nämlich im unbeheizten Bereich eingesetzt. Die Temperatur im unbeheizten Bereich kann beispielsweise kleiner oder gleich 500°C betragen.

Die Beheizung **5** erfolgt in einer bevorzugten Ausführungsform begrenzt auf den Reaktionsbereich und erhitzt diesen auf 1200-1600 °C. Die Beheizung kann von unten oder von oben erfolgen (in **Fig. 2** von unten).

Angewandt werden können alle hier dem Fachmann geläufigen Arten der Beheizung, bevorzugt aber nicht darauf beschränkt ist eine elektrische Beheizung und der Wärmeübertrag mittels Strahlung. Vorzugsweise wird nur die Reaktionszone beheizt, während das restliche Werkstück thermisch isoliert ist, siehe Bereich 6. Die Kombination der einzelnen Reaktoreinheiten **3** ist vorzugsweise so zu gestalten, dass die Werkstücke miteinander gasdicht verbunden sind, dies kann durch eine dem Fachmann geläufige Methode erfolgen (z.B. durch Dichtungen mit entsprechender Verspannung der Werkstücke).

Die oben aufgeführten Ausführungsformen der Vorrichtung erlauben auch deren Betrieb unter erhöhtem Druck.

So kann der Reaktor bei einem Überdruck des Produktgases am Reaktorausgang von 0-10 bar, bevorzugt von 2- 6 bar und besonders bevorzugt bei 3-5 bar betrieben werden. Dies hat den Vorteil, dass der Massendurchsatz und damit die Wirtschaftlichkeit weiter erhöht werden.

Der Druck am Reaktoreingang ergibt sich demnach entsprechend des Durchsatzes.

Des Weiteren können neben Wasserstoff und STC im Eduktgas auch weitere Komponenten vorhanden sein, insbesondere HCl, Kohlenwasserstoffe, Hydrochlorsilane, Oligochlorsilane, hydrierte Oligochlorsilane, Organochlorsilane sowie Siloxane und Organosiloxane.

## Beispiele

Die Versuche wurden in einer Vorrichtung, die komplett aus SiC bestand, durchgeführt.

Es wurde eine Mischung aus 676 ml/h und 264 Nl/h (Nl: Normliter) Wasserstoff eingespeist.

Der minimale hydrodynamische Durchmesser lag bei 0,4 mm.

Der Reaktor wurde in einem Ofen elektrisch beheizt, der Wärmeeintrag fand bei den hohen Temperaturen vorwiegend über Strahlung statt.

Die Messung der Reaktionstemperatur wurde als maximale Oberflächentemperatur der Vorrichtung über eine pyrometrische Messung ermittelt.

Die pyrometrisch ermittelten Daten stimmten mit dem Messwert eines Typ-B Thermoelementes überein, welches direkt neben der Reaktionszone angebracht war.

Die hydrodynamischen Verweilzeiten errechnen sich aus dem Verhältnis von Reaktorvolumen zu Volumenstrom unter den ermittelten Bedingungen (p,T).

Die Verweilzeit in der Reaktionszone lag zwischen 2,8 (1200°C) und 4,3 (1500°C) ms. **Tabelle 1** zeigt die Ergebnisse von fünf Versuchen. Es sind jeweils die Massenströme von H2 und STC sowie Temperaturen, Verweilzeiten (VWZ), Drücke und Konvertierraten (KV-Rate) angegeben.

Messungen erfolgten bei 1000°C, 1100°C, 1200°C, 1400°C und 1500 °C, wobei die Messungen bei 1000°C (Versuch 5) und 1100°C (Versuch 4) als Vergleichsmessungen dienten.

**Tabelle 1**

| Versuch | Massenströme | | Temperaturen [°C] | | | VWZ [ms] | Druck [bar] | KV-Rate [Gew.-%] | | | | | |
|---|---|---|---|---|---|---|---|---|---|---|---|---|---|
| | H2 [Nl/h] | SiCl4 [ml/h] | Ofen | Ofen-Überwacher | Pyrometer | Bis Temp. <700°C | Differenz | 1 | 2 | 3 | 4 | 5 | 6 |
| 1 | 264 | 676 | 1500 | 1500 | 1494 | 4,3 | 3,9 | 25,3 | 25,8 | 25,6 | 25,8 | | |
| 2 | 264 | 676 | 1400 | 1392 | 1391 | 3,1 | 3,6 | 25,6 | 25,1 | 24,8 | | | |
| 3 | 264 | 676 | 1200 | 1185 | 1204 | 2,8 | 3,1 | 23,6 | 23,6 | 23,2 | 23,2 | 23,1 | 23,5 |
| 4 | 264 | 676 | 1100 | 1073 | 1127 | 2,5 | 2,9 | 17,9 | 17,9 | 17,9 | 18,0 | 18,1 | |
| 5 | 264 | 676 | 1000 | 971 | 1039 | 2,3 | 2,7 | 2,5 | 2,7 | 3,3 | 3,7 | 4,7 | 4,9 |

**Patentansprüche**

1. Verfahren zur Konvertierung von Siliciumtetrachlorid in Trichlorsilan, durch Einbringen von Eduktgas enthaltend Siliciumtetrachlorid und Wasserstoff in eine Reaktionszone eines Reaktors, in der die Temperatur 1200-1600°C beträgt, wobei die Reaktionszone durch eine außerhalb der Reaktionszone befindliche Heizung erwärmt wird und das entstehende Produktgas enthaltend Trichlorsilan anschließend abgekühlt wird, unter der Maßgabe, dass innerhalb von 0,1 - 35 ms auf eine Temperatur von 700-900°C abgekühlt wird, wobei das Eduktgas mittels eines Wärmetauschers nach dem Gegenstromprinzip durch das Produktgas erwärmt wird, wobei Reaktor und Wärmetauscher ein einzelnes, gasdichtes Werkstück bilden, wobei das Werkstück aus einem oder mehreren keramischen Materialien ausgewählt aus der Gruppe bestehend aus Siliziumkarbid, Siliziumnitrid, Graphit, mit SiC beschichtetem Graphit und Quarzglas besteht, **dadurch gekennzeichnet, dass** die hydrodynamische Verweildauer von Eduktgas in der Reaktionszone 2,8 - 20 ms beträgt.

2. Verfahren nach Anspruch 1, **dadurch gekennzeichnet, dass** eine Gesamtverweildauer in Reaktor und Wärmetauscher 10 - 400 ms, bevorzugt 20 - 200 ms, besonders bevorzugt 40 - 110 ms beträgt.

3. Verfahren nach einem der Ansprüche 1 bis 2, **dadurch gekennzeichnet, dass** das Abkühlen des Produktgases ohne Halteschritte erfolgt.

4. Verfahren nach einem der Ansprüche 1 bis 3, **dadurch gekennzeichnet, dass** das Produktgas je nach Druck an einem Reaktorausgang innerhalb von 0,1-10 ms bei einem Überdruck von 0,1 bar am Reaktorausgang, innerhalb von 0,1-20 ms bei einem Überdruck von 5 bar am Reaktorausgang und innerhalb von 0,1-35 ms bei einem Überdruck von 10 bar am Reaktorausgang jeweils auf 700°C abgekühlt wird.

5. Verfahren nach einem der Ansprüche 1 bis 4, wobei die Länge des einzelnen Werkstücks höchstens 1500 mm, bevorzugt höchstens 1000 mm und besonders bevorzugt höchstens 600 mm betragen.

6. Verfahren nach einem der Ansprüche 1 bis 5, **dadurch gekennzeichnet, dass** der Wärmetauscher ein Verhältnis Austauschfläche zu Gasvolumen von > 500m$^{-1}$ aufweist.

7. Verfahren nach einem der Ansprüche 1 bis 6, wonach die Reaktor bei einem Überdruck des Produktgases an einem Reaktorausgang von 0-10 bar, bevorzugt von 2- 6 bar und besonders bevorzugt bei 3-5 bar betrieben wird.

8. Verfahren nach einem der Ansprüche 1 bis 7, wonach mehrere einzelne, gasdichte Werkstücke, die jeweils durch Reaktor und Wärmetauscher gebildet werden, miteinander verbunden sind, wobei gemeinsame Durchführungen für Edukt- und Produktgas vorgesehen sind.

**Claims**

1. Process for converting silicon tetrachloride to trichlorosilane, by introducing reactant gas comprising silicon tetrachloride and hydrogen into a reaction zone of a reactor in which the temperature is 1200-1600°C, wherein the reaction zone is heated by a heater located outside the reaction zone and the product gas comprising trichlorosilane which forms is then cooled, with the proviso that it is cooled to a temperature of 700-900°C within 0.1-35 ms, wherein the reactant gas is heated by the product gas by means of a heat exchanger working in countercurrent, wherein reactor and heat exchanger form a single, gas-tight component, wherein the component consists of one or more ceramic materials selected from the group consisting of silicon carbide, silicon nitride, graphite, SiC-coated graphite and quartz glass, **characterized in that** the hydrodynamic residence time of reactant gas in the reaction zone is 2.8-20 ms.

2. Process according to Claim 1, **characterized in that** a total residence time in reactor and heat exchanger is 10-400 ms, preferably 20-200 ms, more preferably 40-110 ms.

3. Process according to either of Claims 1 and 2, **characterized in that** the cooling of the product gas is effected without hold steps.

4. Process according to any of Claims 1 to 3, **characterized in that** the product gas, according to the pressure at a reactor outlet, is cooled in each case to 700°C within 0.1-10 ms in the case of a gauge pressure of 0.1 bar at the reactor outlet, within 0.1-20 ms in the case of a gauge pressure of 5 bar at the reactor outlet, and within 0.1-35 ms in the case of a gauge pressure of 10 bar at the reactor outlet.

5. Process according to any of Claims 1 to 4, wherein the length of the single component is not more than 1500 mm, preferably not more than 1000 mm and more preferably not more than 600 mm.

6. Process according to any of Claims 1 to 5, **characterized in that** the heat exchanger has a ratio of exchange area to gas volume of > 500 m$^{-1}$.

7. Process according to any of Claims 1 to 6, in which the reactor is operated at a gauge pressure of the product gas at a reactor outlet of 0-10 bar, preferably of 2-6 bar and more preferably at 3-5 bar.

8. Process according to any of Claims 1 to 7, in which a plurality of single gas-tight components each formed by reactor and heat exchanger are connected to one another, with provision of common passages for reactant and product gas.


**Revendications**

1. Procédé pour la conversion de tétrachlorure de silicium en trichlorosilane par introduction d'un gaz de départ contenant du tétrachlorure de silicium et de l'hydrogène dans une zone de réaction d'un réacteur, dans laquelle la température est de 1200-1600°C, la zone de réaction étant chauffée par un chauffage se trouvant en dehors de la zone de réaction et le gaz produit formé, contenant du trichlorosilane, est ensuite refroidi, à condition qu'on refroidisse en 0,1-35 ms à une température de 700-900°C, le gaz de départ étant chauffé au moyen d'un échangeur thermique selon le principe de contre-courant par le gaz produit, le réacteur et l'échangeur thermique formant une pièce unique étanche au gaz, la pièce étant constituée par un ou plusieurs matériaux céramiques, choisis dans le groupe constitué par le carbure de silicium, le nitrure de silicium, le graphite, le graphite revêtu de SiC et le verre de quartz, **caractérisé en ce que** la durée de séjour hydrodynamique du gaz de départ dans la zone de réaction est de 2,8-20 ms.

2. Procédé selon la revendication 1, **caractérisé en ce qu'**une durée de séjour totale dans le réacteur et l'échangeur thermique est de 10-400 ms, de préférence de 20-200 ms, de manière particulièrement préférée de 40-110 ms.

3. Procédé selon l'une quelconque des revendications 1 à 2, **caractérisé en ce que** le refroidissement du gaz produit est réalisé sans étapes de maintien.

4. Procédé selon l'une quelconque des revendications 1 à 3, **caractérisé en ce que** le gaz produit est refroidi en fonction de la pression au niveau d'une sortie du réacteur, en 0,1-10 ms à une surpression de 0,1 bar à la sortie du réacteur, en 0,1-20 ms à une surpression de 5 bars à la sortie du réacteur et en 0,1-35 ms à une surpression de 10 bars à la sortie du réacteur, à chaque fois à 700°C.

5. Procédé selon l'une quelconque des revendications 1 à 4, la longueur de la pièce unique étant d'au plus 1500 mm, de préférence d'au plus 1000 mm et de manière particulièrement préférée d'au plus 600 mm.

6. Procédé selon l'une quelconque des revendications 1 à 5, **caractérisé en ce que** l'échangeur thermique présente un rapport de surface d'échange à volume gazeux > 500 m$^{-1}$.

7. Procédé selon l'une quelconque des revendications 1 à 6, selon lequel le réacteur est exploité à une surpression du gaz produit au niveau d'une sortie de réacteur de 0-10 bars, de préférence de 2-6 bars et de manière particulièrement préférée de 3-5 bars.

8. Procédé selon l'une quelconque des revendications 1 à 7, selon lequel plusieurs pièces uniques, étanches au gaz, qui sont à chaque fois formées par un réacteur et un échangeur thermique, sont reliées les unes aux autres, des passages communs pour le gaz de départ et le gaz produit étant prévus.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3933985 A
- DE 3024320 C2
- US 4217334 A
- WO 2008146741 A1
- US 8168152 B2
- EP 2088124 A1
- EP 2085359 A1
- DE 3024319 A1
- US 8197784 B2
- DE 102010039267 A1
- US 20080112875 A1
- DE 102005005044 A1